(19) Europäisches Patentamt / European Patent Office / Office européen des brevets

(11) **EP 1 998 981 B1**

(12) **FASCICULE DE BREVET EUROPEEN**

(45) Date de publication et mention
de la délivrance du brevet:
**29.09.2010 Bulletin 2010/39**

(21) Numéro de dépôt: **07731659.4**

(22) Date de dépôt: **23.02.2007**

(51) Int Cl.:
***B60R 21/0132*** *(2006.01)*   ***B60R 21/0134*** *(2006.01)*

(86) Numéro de dépôt international:
**PCT/FR2007/050840**

(87) Numéro de publication internationale:
**WO 2007/113404 (11.10.2007 Gazette 2007/41)**

(54) **SYSTEME POUR CONTROLER LE DECLENCHEMENT DES ORGANES DE PROTECTION DES OCCUPANTS AVANT L'IMPACT LATERAL D'UN VEHICULE**

SYSTEM ZUM AUSLÖSEN VON ELEMENTEN ZUM SCHUTZ DER VORDEREN INSASSEN EINES FAHRZEUGS IM FALLE EINER SEITLICHEN KOLLISION

SYSTEM FOR TRIGGERING OF ELEMENTS PROTECTING FRONT PASSENGERS IN CASE OF LATERAL COLLISION OF A VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.03.2006 FR 0602777**

(43) Date de publication de la demande:
**10.12.2008 Bulletin 2008/50**

(73) Titulaire: **Renault SAS**
**92100 Boulogne Billancourt (FR)**

(72) Inventeurs:
• **GUYONVARCH, Laurette**
**F-92320 Chatillon (FR)**

• **JOST, Benoît**
**F-91000 Evry (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
WO-A-01/19653          FR-A- 2 884 212
US-A1- 2002 105 416

## Description

La présente invention concerne un système pour contrôler le déclenchement des organes de protection des occupants, en particulier les coussins gonflables, avant l'impact latéral d'un véhicule automobile.

Les études d'accidentologie montrent que les chocs latéraux sur les véhicules automobiles représentent une part importante des accidents mortels.

En cas de choc latéral, les systèmes actuels de protection des occupants (coussins gonflables ou airbags) sont déclenchés sur la base de seuils de décélération à partir du contact véhicule-obstacle. Il s'agit donc d'une technologie d'activation en situation de post-crash. Ceci a pour conséquence de restreindre le temps disponible pour la mise en place complète des airbags avant intrusion de l'obstacle impactant. Ce qui, en plus du faible espace disponible entre les occupants et les portières, impose une taille maximale des airbags relativement faible.

Or un des moyens d'augmenter la protection des occupants lors des chocs latéraux passe par la possibilité d'intégrer des airbags plus volumineux. Ceci ne peut se faire que par l'augmentation du temps disponible à leur mise en place. L'utilisation de technologies type capteur de contact ou de pression intégrés sur les flancs d'un véhicule permet d'obtenir une amélioration du système en obtenant un instant de déclenchement plus proche de l'événement. Cependant l'efficacité d'un tel système reste limitée du fait de l'espace contraint entre l'occupant et l'extérieur du véhicule.

Le moyen optimal d'augmenter la protection des occupants d'un véhicule en situation de crash latéral est de déclencher les airbags en situation de "pré crash" (avant choc). Pour cela, il est donc primordial de disposer d'un système permettant de détecter un obstacle impactant le véhicule avant contact.

Le système pré crash latéral doit donc être muni d'un capteur de détection de l'environnement capable de prédire un choc quelques millisecondes en avance. Etant établi qu'un tel système agit sur des moyens de protection non réversibles (type airbag), la sécurisation de l'efficience du déclenchement doit être particulièrement sévérisé (taux de fausse alarme du système visé nul). A cette fin, le système pré crash latéral ne déclenchera les systèmes de protection qu'en cas de détection, par des éléments de dynamique véhicule, de perte de contrôle « sévère » constituant une part prépondérante des chocs latéraux mortels.

Aucun capteur de détection de l'environnement existant ne possède un taux de fausse alarme nul. Il faut donc étudier la fusion de données pour faire chuter le taux de fausse alarme. Pour que le système ne soit pas trop coûteux, le recours à d'autres capteurs est écarté.

Une façon de créer un système de protection plus efficace en cas de choc latéral est de déclencher les organes de protection plus tôt après le choc (voir US6725141 et EP1355805). Le brevet FR2828667 fusionne les données d'un capteur d'impact avec celles d'un capteur pré crash qui renseigne la vitesse de rapprochement et l'instant d'impact. Grâce à ce capteur, il est possible d'abaisser voir d'annuler les seuils de déclenchement des accéléromètres dédiés aux coussins gonflables. L'efficacité d'un tel système reste limitée aux déclenchements en post crash.

La solution du capteur pré crash est utilisée dans le système du brevet US6856874 avec un radar 24 GHz pour les chocs frontaux. Le système est basé uniquement sur la détection d'obstacles. Toute fausse alarme du radar entraîne de fait un déclenchement intempestif de l'airbag.

Dans le cas du choc latéral, le système décrit dans l'US6571161 combine un radar pré crash avec des données de localisation (GPS). Cette solution ne peut couvrir que les situations de crashs latéraux impliquant deux véhicules. De plus, elle nécessite que les deux véhicules considérés soient équipés afin de pouvoir échanger leurs données de localisation.

Par ailleurs, le système décrit dans le brevet US6728617 utilise conjointement des informations issues de la dynamique du véhicule, d'un radar et d'une caméra pour déterminer une zone de danger. Un tel système est complexe et onéreux.

Le document US 2002/105416 A1 décrit un système pour contrôler le déclenchement d'organes de protection des occupants avant un impact latéral d'un véhicule automobile, comprenant un sous-système de contrôle dynamique du véhicule. Le système comprend en outre un radar capable de détecter un obstacle et adapté pour évaluer le temps avant l'impact et pour mesurer la vitesse relative du véhicule par rapport à un obstacle, des moyens pour comparer le temps par rapport à un seuil A et la vitesse Vr par rapport à une vitesse minimale Vrmin et une vitesse maximale Vrmax et des moyens pour commander le déclenchement des organes de protection lorsque les conditions suivantes sont remplies: TTI < seuil A et Vr (min) < Vr < Vr (max). A étant égal au temps nécessaire pour la mise en oeuvre des organes de protection.

La demande de brevet français n° 00503425 publiée FR2884212 A1 décrit un système pour contrôler le déclenchement des organes de protection tels que des coussins gonflables avant un impact latéral d'un véhicule automobile, comprenant un sous-système de contrôle dynamique du véhicule qui comprend des moyens pour évaluer la durée théorique de perte de contrôle du véhicule (DTPC) à partir d'informations délivrées par des capteurs telles que l'accélération transversale, la vitesse de lacet et d'angle du volant du véhicule.

Le système comprend en outre, des moyens pour commander le déclenchement des moyens de protection en fonction de cette évaluation.

Le but de la présente invention est d'apporter des perfectionnements au système décrit dans la demande de brevet FR0503425 ci-dessus, tout en remédiant aux inconvénients de l'état de la technique discuté plus haut.

Suivant l'invention, ce système de contrôle est **caractérisé en ce qu'**il comprend en outre un radar capable de détecter un obstacle et adapté pour évaluer le temps avant l'impact (TTI) avec l'obstacle et pour mesurer la vitesse relative (Vr) du véhicule par rapport à un obstacle, des moyens pour comparer le temps TTI par rapport à un seuil A et la vitesse (Vr) par rapport à une vitesse minimale ($Vr_{min}$) et une vitesse maximale ($Vr_{max}$) et des moyens pour commander le déclenchement des moyens de protection lorsque les conditions suivantes sont remplies:

$$TTI < seuil\ A$$

$$Vr_{min} < Vr < Vr_{max,}$$

A étant le temps nécessaire pour la mise en place des moyens de protection.

Le radar ci-dessus complète ainsi le système de contrôle dynamique du véhicule tel que décrit dans la demande de brevet FR0503425.

Grâce à ce radar, le déclenchement des organes de protection s'effectue de manière plus fiable, avec un taux de "fausse alarme" c'est-à-dire de déclenchements intempestifs pratiquement nul.

Selon une version préférée de l'invention, les moyens pour commander le déclenchement des organes de protection sont adaptés pour commander le déclenchement lorsque:

- le sous-système dynamique du véhicule a déterminé une durée théorique de perte de contrôle DTPC supérieure à un seuil B et que:
- le radar a détecté que les conditions suivantes étaient réalisées:

$$TTI < seuil\ A$$

$$Vr_{min} < Vr < Vr_{max}$$

Dans une réalisation avantageuse de l'invention, le système comprend également un sous-système de contrôle de trajectoire du type ESP, les moyens pour commander le déclenchement des organes de protection étant adaptés pour commander le déclenchement lorsque les conditions supplémentaires suivantes sont réalisées:

- l'ESP est en régulation
- $V_{min}$ < Vitesse du véhicule < $V_{max}$

Ces conditions permettent de réduire encore davantage le taux des déclenchements intempestifs des organes de protection.

De préférence également, le système est mis en préalerte lorsque DTPC > TTI, le déclenchement des organes de protection étant commandé seulement lorsque TTI < au seuil A.

Le radar utilisé est de préférence, un radar doppler dont la fréquence est sensiblement égale à 5,8 GHz qui présente l'avantage de permettre une détection très précise de l'obstacle avant l'impact du véhicule, plus précise par exemple que la détection permise par un radar 24 GHz ou 76 GHz.

D'autres particularités et avantages de l'invention apparaîtront encore tout au long de la description ci-après.

Au dessin annexé, donné à titre d'exemple, non limitatif:

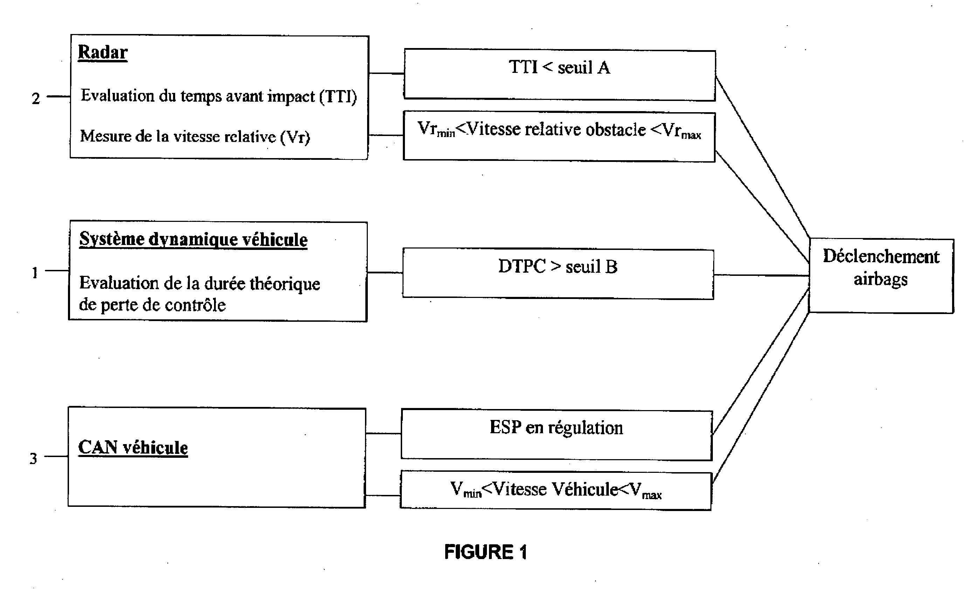

- la figure 1 est un schéma d'ensemble d'un exemple de réalisation préférée du système de contrôle selon l'invention.

Comme montré sur le schéma de la figure 1, le système pour contrôler le déclenchement d'organes de protection des occupants avant un impact latéral d'un véhicule automobile, comprend un sous-système 1 de contrôle dynamique du véhicule qui comprend des moyens pour évaluer la durée théorique de perte de contrôle du véhicule (DTPC), à partir d'informations délivrées par des capteurs notamment sur l'accélération transversale, la vitesse de lacet et d'angle du volant du véhicule. Des moyens sont prévus pour commander le déclenchement des coussins gonflables en fonction de cette évaluation.

Un tel système a été décrit dans la demande de brevet français FR050325 et ne sera pas détaillé davantage ici. Le système selon l'invention comprend en outre un radar 2 capable de détecter un obstacle et adapté pour évaluer le temps avant l'impact (TTI) et pour mesurer la vitesse relative (Vr) du véhicule par rapport à un obstacle. Des moyens sont prévus pour comparer le temps TTI par rapport à un seuil A et la vitesse (Vr) par rapport à une vitesse minimale ($Vr_{min}$) et une vitesse maximale ($Vr_{max}$). Des moyens sont prévus pour commander le déclenchement des coussins gonflables lorsque les conditions suivantes sont remplies:

$$TTI < seuil\ A$$

$$Vr_{min} < Vr < Vr_{max}$$

A étant le temps nécessaire pour déployer les coussins gonflables.

Les moyens pour commander le déclenchement des organes de protection (coussins gonflables) sont adaptés pour commander le déclenchement de ceux-ci lorsque:

- le sous-système dynamique du véhicule 1 a déterminé une durée théorique de perte de contrôle DTPC supérieure à un seuil B et que:
- le radar 2 a détecté que les conditions suivantes étaient réalisées :

$$TTI < seuil\ A$$

$$Vr_{min} < Vr < Vr_{max}$$

Dans l'exemple de la figure 1, le véhicule est en outre équipé d'un sous-système 3 de contrôle de trajectoire du type ESP. Dans ce cas, les moyens pour commander le déclenchement des organes de protection sont adaptés pour commander le déclenchement de ceux-ci lorsque les conditions supplémentaires suivantes sont réalisées:

- l'ESP est en régulation
- Vmin < Vitesse du véhicule < Vmax

Ainsi dans l'exemple de la figure 1, les coussins gonflables (airbags) sont déclenchés, avant l'impact latéral du véhicule sur un obstacle, lorsque les trois systèmes 1, 2, 3 remplissent chacun les conditions indiquées sur la figure 1.

La combinaison de l'ensemble de ces conditions permet de ramener à zéro le taux des "fausses alarmes" c'est-à-dire des déclenchements intempestifs des airbags.

Le radar du sous-système 2 doit être capable de détecter un obstacle a une distance très proche, de l'ordre du mètre. Le seuil A en ce qui concerne le temps avant l'impact est le temps nécessaire pour déployer efficacement les coussins gonflables ou autres organes de protection.

Le radar doit également être capable de faire la distinction entre un obstacle dangereux immobile ou mobile et les obstacles non dangereux, tels que les trottoirs et les objets volants "mous" tels que ballons, sacs plastiques, oiseaux, etc...

De préférence, le radar est un radar doppler dont la fréquence est égale à 5,8 GHz pour permettre une détection et des mesures précises et fiables.

Le seuil B relatif au sous-système dynamique de véhicule est défini comme une durée au-delà de laquelle la perte de contrôle du véhicule est considérée comme "sévère" c'est-à-dire pratiquement irrécupérable.

Les conditions relatives au système 3 de contrôle de la trajectoire du véhicule, à savoir si l'ESP est en régulation et la vitesse du véhicule, sont également importantes dans la décision de déclenchement des airbags.

Une première évolution du système selon l'invention consiste à considérer que le seuil B du sous-système dynamique du véhicule est évolutif en temps réel, par exemple continuellement égal au temps avant impact TTI évalué par le radar. On peut ainsi mettre le système en préalerte, lorsque la durée DTPC évaluée par le sous-système dynamique du véhicule est supérieure au temps TTI évalué par le radar, le déclenchement des organes de protection étant commandé seulement lorsque:

$$TTI < seuil\ A$$

## Revendications

1. Système pour contrôler le déclenchement d'organes de protection des occupants avant un impact latéral d'un véhicule automobile, comprenant un sous-système de contrôle dynamique du véhicule (1) qui comprend des moyens pour évaluer la durée théorique de perte de contrôle du véhicule (DTPC), à partir d'informations délivrées par des capteurs sur l'accélération transversale, la vitesse de lacet et d'angle du volant du véhicule et des moyens pour commander le déclenchement des organes de protection en fonction de cette évaluation, **caractérisé en ce qu'**il comprend en outre un radar (2) capable de détecter un obstacle et adapté pour évaluer le temps TTI avant l'impact et pour mesurer la vitesse relative (Vr) du véhicule par rapport à un obstacle, des moyens pour comparer le temps avant l'impact TTI par rapport à un seuil A et la vitesse relative Vr par rapport à une vitesse minimale ($Vr_{min}$) et une vitesse maximale $Vr_{max}$ et des moyens pour commander le déclenchement des organes de protection lorsque les conditions suivantes sont remplies:

$$TTI < seuil\ A$$

$$Vr_{min} < Vr < Vr_{max}$$

A étant égal au temps nécessaire pour la mise en oeuvre des organes de protection.

2. Système selon la revendication 1, **caractérisé en ce que** les moyens pour commander le déclenchement des organes de protection sont adaptés pour commander le déclenchement lorsque:

- le sous-système dynamique du véhicule (1) a déterminé une durée théorique de perte de contrôle DTPC supérieure à un seuil B et que:
- le radar (2) a détecté que les conditions suivantes étaient réalisées :

$$TTI < seuil\ A$$

$$Vr_{min} < Vr < Vr_{max}$$

3. Système selon la revendication 2, **caractérisé en ce qu'**il comprend également un sous-système (3) de contrôle de trajectoire du type ESP, les moyens pour commander le déclenchement des organes de protection étant adaptés pour commander le déclenchement lorsque les conditions supplémentaires suivantes sont réalisées:

  - l'ESP est en régulation
  - $V_{min}$ < Vitesse du véhicule < $V_{max}$

4. Système selon l'une des revendications 2 ou 3, **caractérisé en ce que** le système est mis en préalerte lorsque DTPC > TTI, le déclenchement des organes de protection étant commandé seulement lorsque TTI < au seuil A.

5. Système selon l'une des revendications 1 à 4, **caractérisé en ce qu'**il comprend un radar doppler dont la fréquence est égale à 5,8 GHz.

**Claims**

1. System for controlling the triggering of members for protecting occupants before a lateral impact of a motor vehicle, comprising a subsystem for dynamic control of the vehicle (1) which comprises means for assessing the theoretical duration of loss of control of the vehicle (DTPC), based on information delivered by sensors on the transverse acceleration, the speed of yaw and steering-wheel angle of the vehicle, and means for commanding the triggering of the protective members according to this assessment, **characterized in that** it also comprises a radar (2) capable of detecting an obstacle and suitable for assessing the time to impact TTI and for measuring the relative speed (Vr) of the vehicle relative to an obstacle, means for comparing the time to impact TTI relative to a threshold A and the relative speed Vr relative to a minimum speed ($Vr_{min}$) and a maximum speed $Vr_{max}$ and means for commanding the triggering of the protective members when the following conditions are fulfilled:

$$TTI < threshold\ A$$

$$Vr_{min} < Vr < Vr_{max}$$

A being equal to the time necessary for the use of the protective members.

2. System according to Claim 1, **characterized in that** the means for commanding the triggering of the protective members are suitable for commanding the triggering when:

  - the dynamic subsystem of the vehicle (1) has determined a theoretical duration of loss of control DTPC greater than a threshold B and when:
  - the radar (2) has detected that the following conditions have been realised:

$$TTI < threshold\ A$$

$$Vr_{min} < Vr < Vr_{max}$$

3. System according to Claim 2, **characterized in that** it also comprises a subsystem (3) for controlling trajectory of the ESP type, the means for commanding the triggering of the protective members being suitable for commanding the triggering when the following additional conditions are realised:

  - the ESP is in regulation
  - $V_{min}$ < vehicle speed < $V_{max}$

4. System according to one of Claims 2 or 3, **characterized in that** the system is set to pre-alert when DTPC > TTI, the triggering of the protective members being commanded only when TTI < threshold A.

5. System according to one of Claims 1 to 4, **characterized in that** it comprises a Doppler radar the frequency of which is equal to 5.8 GHz.

**Patentansprüche**

1. System zur Kontrolle der Auslösung von Einrichtungen zum Schutz der Insassen vor einem Seitenaufprall eines Kraftfahrzeugs, das ein Subsystem zur dynamischen Kontrolle des Fahrzeugs (1) enthält, welches Mittel zur Abschätzung der theoretischen Dauer des Kontrollverlusts des Fahrzeugs (DTPC) ausgehend von Informationen, die von Sensoren über die Querbeschleunigung, die Giergeschwindigkeit und den Lenkradwinkel des Fahrzeugs geliefert werden, und Mittel enthält, um die Auslösung der Schutzeinrichtungen in Abhängigkeit von dieser Abschätzung zu befehlen, **dadurch gekennzeichnet, dass** es außerdem ein Radargerät (2), das fähig ist, ein Hindernis zu erfassen, und geeignet ist, um die Zeit TTI vor dem Aufprall abzuschätzen und um die relative Geschwindigkeit (Vr) des Fahrzeugs bezüglich eines Hindernisses zu messen, Mittel zum Vergleich der Zeit TTI vor dem Aufprall bezüglich einer Schwelle A, und der relativen Geschwindigkeit Vr bezüglich einer Mindestgeschwindigkeit ($Vr_{min}$) und einer Höchstgeschwindigkeit $Vr_{max}$, und Mittel zum Befehlen der Auslösung der Schutzeinrichtungen enthält, wenn die folgenden Bedingungen erfüllt sind:

$$TTI < Schwelle\ A$$

$$Vr_{min} < Vr < Vr_{max}$$

wobei A gleich der Zeit ist, die zur Anwendung der Schutzeinrichtungen notwendig ist.

2. System nach Anspruch 1, **dadurch gekennzeichnet, dass** die Mittel zum Befehlen der Auslösung der Schutzeinrichtungen geeignet sind, um die Auslösung zu befehlen, wenn:

   - das dynamische Subsystem des Fahrzeugs (1) eine theoretische Dauer des Kontrollverlusts DTPC größer als eine Schwelle B ermittelt hat, und wenn:
   - das Radargerät (2) erfasst hat, dass die folgenden Bedingungen erfüllt sind:

$$TTI < Schwelle\ A,$$

$$Vr_{min} < Vr < Vr_{max}$$

3. System nach Anspruch 2, **dadurch gekennzeichnet, dass** es ebenfalls ein Subsystem (3) der Spursteuerung vom Typ ESP enthält, wobei die Mittel zum Befehlen der Auslösung der Schutzeinrichtungen geeignet sind, um die Auslösung zu befehlen, wenn die folgenden zusätzlichen Bedingungen erfüllt sind:

   - das ESP ist im Regulierungszustand
   - $V_{min} <$ Geschwindigkeit des Fahrzeugs $< V_{max}$

4. System nach einem der Ansprüche 2 oder 3, **da-**

**durch gekennzeichnet, dass** das System in Voralarm versetzt wird, wenn DTPC > TTI, wobei die Auslösung der Schutzeinrichtungen nur befohlen wird, wenn TTI < Schwelle A.

5. System nach einem der Ansprüche 1 bis 4, **dadurch gekennzeichnet, dass** es ein Doppler-Radar enthält, dessen Frequenz gleich 5,8 GHz ist.

EP 1 998 981 B1

| Radar | | TTI < seuil A |
|---|---|---|

**Radar**

Evaluation du temps avant impact (TTI)

Mesure de la vitesse relative (Vr)

TTI < seuil A

$Vr_{min}$<Vitesse relative obstacle <$Vr_{max}$

**Système dynamique véhicule**

Evaluation de la durée théorique de perte de contrôle

DTPC > seuil B

Déclenchement airbags

**CAN véhicule**

ESP en régulation

$V_{min}$<Vitesse Véhicule<$V_{max}$

**FIGURE 1**

**EP 1 998 981 B1**

## RÉFÉRENCES CITÉES DANS LA DESCRIPTION

**Documents brevets cités dans la description**

- US 6725141 B
- EP 1355805 A
- FR 2828667
- US 6856874 B
- US 6571161 B
- US 6728617 B
- US 2002105416 A1
- FR 00503425
- FR 2884212 A1
- FR 0503425
- FR 050325